# EUROPEAN PATENT APPLICATION

(11) **EP 2 002 725 A1**
(43) Date of publication of application: **17.12.2008**
(21) Application number: 08460021.2
(22) Date of filing: 03.06.2008
(51) Int. Cl.: A21D 8/02

(54) **Process of dough makeup**

(30) Priority: 06.06.2007 PL 38259507
(71) Applicant: Firma Wieczorek Maciej Wieczorek, 63-800 Gostyn (PL)
(72) Inventor: Wieczorek, Maciej, 63-800 Gostyn (PL)

(57) **Abstract**

The way of forming the dough, according to the invention, in which one rounds the dough in the process of rounding and elongates the dough in the process of elongation, moreover, in the way of forming the dough one makes still the process which is between the process of rounding off and the process of elongation of the dough, characterised in that, in the process which is between the process of rounding off and the process of elongation, additionally one gives the dough the elongated shape, advantageously, similar to a cylinder.

The shape which additionally one gives the dough, is different than the shape of the dough one gets after the process of rounding off and it is different than the shape of the dough one gets after the process of elongation.

## Description

The object of the invention is the way of forming the dough.

In the known way of the forming of the dough, one rounds the dough in the process of rounding and elongates the dough in the process of elongation. There is a process between these processes, which ,dependence on time of its duration may fulfill the function of rest, relaxation, slackening of the dough or growth of the dough.
In the process which is between the processes of rounding and elongation, rounded pieces of the dough are moved by means of conveyers for the process of elongation. In just this process the shaped piece of the dough undergoes gradual deformation under such factors as gravity forces, different consistence of the dough or mechanical reaction of the shape of the transporting agent. That means, that the dough gets the shape similar to the shape of the bucket in case of transporting of the dough by bucket conveyor or the shape of the flat pie, in case of transporting the dough by belt conveyor.
In the process between rounding and elongation, the dough keeps the shape possibly similar to the shape of the dough one gets after the process of rounding. One uses the conveyors with buckets which the rounded dough falls into and next it moves at a definite time for elongation. In order to keep the shape similar to a ball, pieces of the dough, from one bucket fall into the next bucket, which causes their temporary restoration to the shape similar to the shape which the dough has after rounding.

Uncontrolled deformation of the dough has undesirable influence on the process of elongation itself.

In order to decrease the influence of the mentioned elements on the deformation of the dough after the process of rounding and before bringing the dough into to the process of elongation, the way of forming the dough was worked out, which allows the gradual change of the shape of the dough, from the shape obtained after the rounding to the shape, if possible similar to the shape of the dough, one gets after elongation.

The way of forming the dough, according to the invention, in which one rounds the dough in the process of rounding and elongates the dough in the process of elongation, moreover, in the way of forming the dough one makes still the process which is between the processes of rounding off and elongation, characterised in that, in the process which is between the process of rounding off and the process of elongation, additionally one gives the dough the elongated shape, advantageously, similar to a cylinder.
The shape, which additionally one gives the dough, is different than the shape of the dough one gets after the process of rounding off and it is different than the shape of the dough one gets after the process of elongation.

Introduction of the additional activity in the process between rounding and elongation relying on giving the piece of dough the shape similar to the shape of the dough after elongation, has advantageous influence on acquiring the final shape after the process of elongation of the dough.
The additional forcing of the shape may be done once or many times depending on the run of the technological process. It is essential, that giving the shape has to take place after rounding, but before elongation, so during the process, in which the dough is subjected to uncontrolled deformation.
By additional giving the previously rounded pieceof the dough the elongated shape, the shape of the dough approximates gradually the shape which one gets after the process of elongation.

In the way of forming the dough, according to the invention, first one rounds the dough in the process of rounding, then one gives the dough the elongated shape once or repeatedly, similar to a cylinder and then one elongates the dough in the process of elongation.
Additionally given shape of the dough is different than the shape of the dough got after the process of rounding and it is different than the shape of the dough which one gets after the process of elongation.

## Claims

1. The way of forming the dough, in which one rounds the dough in the process of rounding and elongates the dough in the process of elongation, moreover, in the way of forming the dough one makes still the process which is between the process of rounding off and the process of elongation of the dough, **characterised in that**, in the process which is between the process of rounding off and the process of elongation, additionally one gives the dough the elongated shape, advantageously, similar to a cylinder, moreover the shape which additionally one gives the dough, is different than the shape of the dough one gets after the process of rounding off and it is different than the shape of the dough one gets after the process of elongation.
